# EUROPÄISCHE PATENTANMELDUNG

(11) **EP 2 495 523 A1**
(43) Veröffentlichungstag der Anmeldung: **05.09.2012**
(21) Anmeldenummer: 12152799.8
(22) Anmeldetag: 27.01.2012
(51) Int. Cl.: G01B 11/24

(54) **Vorrichtung und Verfahren zur Identifizierung von Leergut**

(30) Priorität: 04.03.2011 DE 102011005124
(71) Anmelder: Digi Deutschland GmbH, 53773 Hennef (DE)
(72) Erfinder: Oschlies, Manuel, 14612 Falkensee (DE)
(74) Vertreter: Liedtke, Markus

(57) **Zusammenfassung**

Die Erfindung betrifft eine Vorrichtung (1) zur Identifizierung von Leergut (2) mit einer Lichtquelle (1.1) zur Aussendung von Licht (L), einer optischen Einheit (1.2) zur Ablenkung und Reflexion des Lichtes (L), einer Kamera (1.3) zur Aufnahme des reflektierten Lichtes (L) und einer Verarbeitungseinheit (1.4) zur Verarbeitung von Bildinformationen. Erfindungsgemäß ist die optische Einheit (1.2) aus einem ersten Reflektor (1.2.1) und einem diesem gegenüberliegenden zweiten Reflektor (1.2.2) gebildet, wobei der erste Reflektor zumindest eine Fresnel-Linse (1.2.1.1) umfasst, mittels welcher das von der Lichtquelle (1.1) ausgesendete Licht (L) in horizontaler Richtung (X) und vertikaler Richtung (Y) parallelisierbar ist, wobei das Leergut (2) in einer vorgebbaren Lage in einem Bereich (B) zwischen dem ersten Reflektor (1.2.1) und dem zweiten Reflektor (1.2.2) positionierbar ist und die optische Einheit (1.2) derart angeordnet ist, dass der Bereich (B) zumindest zweimal auf dem gleichen Weg und/oder in entgegengesetzten Richtungen (Z, -Z) mit dem parallelisierten Licht (L) der Lichtquelle (1.1) durchflutbar ist.

Die Erfindung betrifft weiterhin ein Verfahren zur Identifizierung von Leergut (2).

## Beschreibung

Die Erfindung betrifft eine Vorrichtung zur Identifizierung von Leergut mit einer Lichtquelle zur Aussendung von Licht, einer optischen Einheit zur Ablenkung und Reflexion des Lichtes, einer Kamera zur Aufnahme des reflektierten Lichtes und einer Verarbeitungseinheit zur Verarbeitung von Bildinformationen.

Die Erfindung betrifft weiterhin ein Verfahren zur Identifizierung von Leergut.

Aus dem Stand der Technik sind automatisierte Rücknahmesysteme zur Annahme von entleerten, insbesondere pfandpflichtigen Getränkeverpackungen, wie z. B. Getränkeflaschen, Getränkedosen oder Getränkekästen bekannt. Dabei werden die Getränkeverpackungen - im Folgenden als Leergut bezeichnet - üblicherweise in einem Scannvorgang identifiziert und anschließend einem Sammelbehälter zugeführt. Es existieren verschiedene Vorrichtungen und Verfahren zur Identifizierung von Leergut.

Eine derartige Vorrichtung ist aus der DE 195 12 133 A1 bekannt. Die Vorrichtung ist zur Erzeugung, Abtastung und Erkennung einer Kontur-Abbildung eines Flüssigkeitsbehälters vorgesehen und umfasst eine Lichtquelle, einen Lichtdetektor und eine optische Einheit, die Lichtstrahlen von der Lichtquelle als parallele Strahlen quer über eine Bewegungsbahn des Behälters in der Form von parallelen Strahlen leitet und Licht, das nicht durch den Behälter abgedeckt oder abgelenkt ist, dem Lichtdetektor zuleitet. Ein Rechner ist mit dem Lichtdetektor verbunden und verarbeitet die Signale des Detektors, die für die abgetasteten Lichtstrahlen repräsentativ sind. Eine Vergleichseinrichtung vergleicht diese verarbeiteten Signale mit vorgegebenen Behälterdaten und erkennt die Kontur-Abbildung des Behälters. Die Einrichtung zur Ausrichtung der Lichtstrahlen umfasst Fresnel-Linsen, die koaxial auf gegenüberliegenden Längsseiten der Bewegungsbahn des Behälters angeordnet sind. Die Lichtquelle gibt Licht in Richtung der ersten Fresnel-Linse ab, wobei die Lichtquelle eine stationäre Leuchtdiode ist. Der Lichtdetektor erfasst die Kontur des Behälters, soweit sie durch das Licht gezeigt wird, das nicht durch den Behälter abgedeckt oder abgelenkt ist, sowie etwaiges Licht, das durch den Behälter hindurchgeht, wobei der Lichtdetektor eine CCD-Kamera ist.

Der Erfindung liegt die Aufgabe zu Grunde, eine gegenüber dem Stand verbesserte Vorrichtung und ein verbessertes Verfahren zur Identifizierung von Leergut anzugeben.

Hinsichtlich der Vorrichtung wird die Aufgabe erfindungsgemäß durch die im Anspruch 1 angegebenen Merkmale und hinsichtlich des Verfahrens durch die im Anspruch 9 angegebenen Merkmale gelöst.

Vorteilhafte Ausgestaltungen der Erfindung sind Gegenstand der Unteransprüche.

Eine Vorrichtung zur Identifizierung von Leergut umfasst eine Lichtquelle zur Aussendung von Licht, eine optische Einheit zur Ablenkung und Reflexion des Lichtes, eine Kamera zur Aufnahme des reflektierten Lichtes und einer Verarbeitungseinheit zur Verarbeitung von Bildinformationen. Erfindungsgemäß ist die optische Einheit aus einem ersten Reflektor und einem diesem gegenüberliegenden zweiten Reflektor gebildet, wobei der erste Reflektor zumindest eine Fresnel-Linse umfasst, mittels welcher das von der Lichtquelle ausgesendete Licht in horizontaler Richtung und vertikaler Richtung parallelisierbar ist, wobei das Leergut in einer vorgebbaren Lage in einem Bereich zwischen dem ersten Reflektor und dem zweiten Reflektor positionierbar ist und die optische Einheit derart angeordnet ist, dass der Bereich zumindest zweimal auf dem gleichen Weg und/oder in entgegengesetzten Richtungen mit dem parallelisierten Licht der Lichtquelle durchflutbar ist.

Die erfindungsgemäße Vorrichtung ist in besonders vorteilhafter Weise mit einem geringen Aufwand herstellbar. Insbesondere gegenüber aus dem Stand der Technik bekannten optischen Einheiten mit zwei oder mehr Fresnel-Linsen entfallen ein hoher technischer Aufwand und daraus resultierende hohe Kosten. Da die optische Einheit ohne eine Verwendung beweglicher Teile ausgeführt ist, ist als weiterer Vorteil eine hohe Zuverlässigkeit der Vorrichtung zur Identifizierung von Leergut zu nennen. Aufgrund der mehrfachen Durchflutung des Bereichs, welcher zur Anordnung des Leergutes vorgesehen ist, mit dem parallelisierten Licht auf dem gleichen Weg und/oder in entgegengesetzter Richtung wird ein sehr hoher Kontrast zur Erkennung einer Form des Leergutes erreicht, was zu einer zuverlässigen Identifizierung des Leergutes führt. Aufgrund der Parallelisierung des Lichtes sowohl in horizontaler als auch vertikaler Richtung wird eine Streuung des Lichtes, welches nicht vom Leergut abgelenkt wird, zwischen dem ersten Reflektor und dem zweiten Reflektor vermieden, so dass der zweite Reflektor eine sehr kleine Bauform aufweisen kann, woraus eine sehr kleine Bauform der Vorrichtung bei gleichzeitig maximaler Lichtausbeute resultiert.

In einer Weiterbildung ist die Fresnel-Linse in eine dem zweiten Reflektor zugewandte und Licht durchlässige Vorderseite des ersten Reflektors eingebracht, wobei eine Rückseite des Reflektors mit einer Licht reflektierenden Schicht versehen ist. Somit bildet die Fresnel-Linse eine bauliche Einheit mit dem ersten Reflektor, woraus neben optimierten optischen Eigenschaften auch eine einfache Handhabung des ersten Reflektors mit der Fresnel-Linse während der Montage der Vorrichtung resultiert. Dabei ist es in besonders vorteilhafter Weise möglich, dass der Reflektor eine plane, d. h. ebene Vorderseite aufweist.

In einer alternativen Weiterbildung bildet die Fresnel-Linse vollständig eine dem zweiten Reflektor zugewandte und Licht durchlässige Vorderseite des ersten Reflektors, wobei eine Rückseite der Fresnel-Linse mit einer Licht reflektierenden Schicht versehen ist. Aus dieser einstückigen Ausbildung von Fresnel-Linse und erstem Reflektor resultiert ebenfalls neben optimierten optischen Eigenschaften eine einfache Handhabung des ersten Reflektors mit der Fresnel-Linse während der Montage der Vorrichtung. Auch in dieser Ausführung ist es in besonders vorteilhafter Weise möglich, dass der Reflektor eine plane, d. h. ebene Vorderseite aufweist.

In dem erfindungsgemäßen Verfahren zur Identifizierung von Leergut wird erfindungsgemäß Licht zu einer den ersten Reflektor und einen zweiten Reflektor umfassenden optischen Einheit gesendet, wobei das auf den ersten Reflektor treffende Licht mittels einer Fresnel-Linse, welche eine reflektierende Rückseite aufweist, derart abgelenkt, in horizontaler Richtung und vertikaler Richtung parallelisiert und durch einen Bereich, welcher zur Anordnung des Leergutes vorgesehen ist, geleitet wird, dass das parallelisierte Licht mittels des zweiten Reflektors reflektiert und gleichbleibend parallel in entgegengesetzter Richtung durch den Bereich zurück auf den ersten Reflektor geleitet und mittels diesem wieder gebündelt einer Kamera zugeführt wird, so dass Bildinformationen in einer Verarbeitungseinheit verarbeitet werden.

Um diese Funktionsweise zu erreichen, weist der zweite Reflektor eine plane und Licht reflektierende dem ersten Reflektor zugewandte Vorderseite auf. Das heißt, die Vorderseite des zweiten Reflektors ist eben ausgebildet, so dass eine Reflexion des parallelisierten Lichtes in parallelisierter Form in entgegensetzter Richtung durch den Bereich zurück zum ersten Reflektor erfolgen kann.

Gemäß einer sinnvollen Weiterführung der Erfindung ist der zweite Reflektor aus einer lackierten Metallplatte gebildet, welche einfach und kostengünstig herstellbar ist und in Verbindung mit der vorteilhaften Ausbildung des ersten Reflektors zu einer hohen Unempfindlichkeit der optischen Einheit gegenüber Fremdlicht führt, was wiederum eine zuverlässige Identifizierung des Leergutes ermöglicht.

Gleichzeitig kann der zweite Reflektor als Begrenzung einer Erkennungskammer der Vorrichtung, also des Bereiches, in welchem sich das Leergut befindet und transportiert wird, dienen. Aus der Ausbildung des zweiten Reflektors als Metallplatte und der damit verbundenen Robustheit resultiert, dass kein zusätzlicher Schutz, beispielsweise eine Glasscheibe, vor dem zweiten Reflektor erforderlich ist.

Gemäß einer weiteren Ausgestaltung der Erfindung sind die Lichtquelle und die Kamera unmittelbar benachbart angeordnet, so dass das von der Lichtquelle ausgesendete Licht mittels der optischen Einheit auf dem gleichen Weg aber in entgegengesetzter Richtung zur Kamera zurückführbar ist. Aus der fest positionierten Anordnung der optischen Einheit kann ein geringer Material- und Kostenaufwand erzielt und eine hohe Zuverlässigkeit der optischen Einheit erreicht werden.

In einer zweckmäßigen Ausführung ist die Lichtquelle eine Punktlichtquelle. Das von der Punktlichtquelle ausgesendete Licht wird in dem erfindungsgemäßen Verfahren zur den ersten Reflektor und den zweiten Reflektor umfassenden optischen Einheit gesendet, wobei das auf den ersten Reflektor treffende Licht mittels der zumindest einen Fresnel-Linse derart abgelenkt, in horizontaler Richtung und vertikaler Richtung parallelisiert und durch den Bereich geleitet wird, dass das parallelisierte Licht mittels des zweiten Reflektors reflektiert und parallelisiert in entgegengesetzter Richtung durch den Bereich zurück auf den ersten Reflektor geleitet und mittels diesem wieder gebündelt der Kamera zugeführt wird, so dass Bildinformationen in der Verarbeitungseinheit verarbeitet werden.

Dabei erfolgt das parallele Zurücksenden des Lichtes nur für die Lichtstrahlen, welche den zweiten Reflektor ungehindert erreichen, d.h. nicht durch das Leergut abgelenkt oder durch das Durchfluten dieses Leergutes gebrochen werden und somit im Winkel von 90° auf den zweiten Reflektor auftreffen. Das heißt, es wird nur Licht, welches im Winkel von 90° auf den planen zweiten Reflektor auftrifft, auf dem gleichen Weg in entgegengesetzter Richtung zurück zum ersten Reflektor gesendet. Hieraus resultiert der Vorteil eines hohen Kontrastes zur Erkennung des Leergutes, da Licht, welches vom ersten Reflektor aus durch das Leergut geleitet und abgelenkt und/oder an diesem umgelenkt wird, nicht im Winkel von 90° auf den zweiten Reflektor auftrifft und nicht von diesem zurück zum ersten Reflektor reflektiert wird. Daraus resultieren wiederum ein Helligkeitsunterschied und Kontrastunterschied, welche die Form des Leergutes wiedergeben und somit eine besonders effektive und genaue Erkennung ermöglichen.

Die Kamera ist, wie bereits beschrieben, vorzugsweise unmittelbar benachbart zur Lichtquelle angeordnet. Das heißt, dass von der Lichtquelle ausgesendete Licht wird aufgrund der Ausbildung der optischen Einheit parallelisiert durch das Leergut geleitet und auf gleichem Weg aber in entgegengesetzter Richtung wieder zurück zur Lichtquelle gesendet, so dass es von der Kamera erfassbar ist.

Die Verwendung der Punktlichtquelle ist besonders kleinbauend ausführbar und ermöglicht gleichzeitig eine hohe Lichtausbeute, aus welcher ein besseres Signal-/Rauschverhältnis resultiert. Durch die Ausbildung des ersten Reflektors mit der Fresnel-Linse und der daraus resultierenden Parallelisierung des von der Lichtquelle ausgesendeten Lichtes in vertikaler und horizontaler Richtung ist es in vorteilhafter Weise möglich, die Vorrichtung zur Identifizierung des Leergutes kleinbauend auszuführen, da der erste Reflektor nur so groß wie das größte zu erfassende Leergut oder nur minimal größer als dieses sein muss.

Ferner ist vorzugsweise eine Transporteinrichtung zur Beförderung des Leerguts und zur Positionierung des Leerguts in der vorgebbaren Lage im Bereich zwischen dem ersten Reflektor und dem zweiten Reflektor vorgesehen.

Ausführungsbeispiele der Erfindung werden im Folgenden anhand von Zeichnungen näher erläutert.

Darin zeigen:
- Figur 1: schematisch eine Draufsicht einer erfindungsgemäßen Vorrichtung zur Identifizierung von Leergut, und
- Figur 2: schematisch eine Seitenansicht der erfindungsgemäßen Vorrichtung zur Identifizierung von Leergut gemäß Figur 1.

Einander entsprechende Teile sind in allen Figuren mit den gleichen Bezugszeichen versehen.

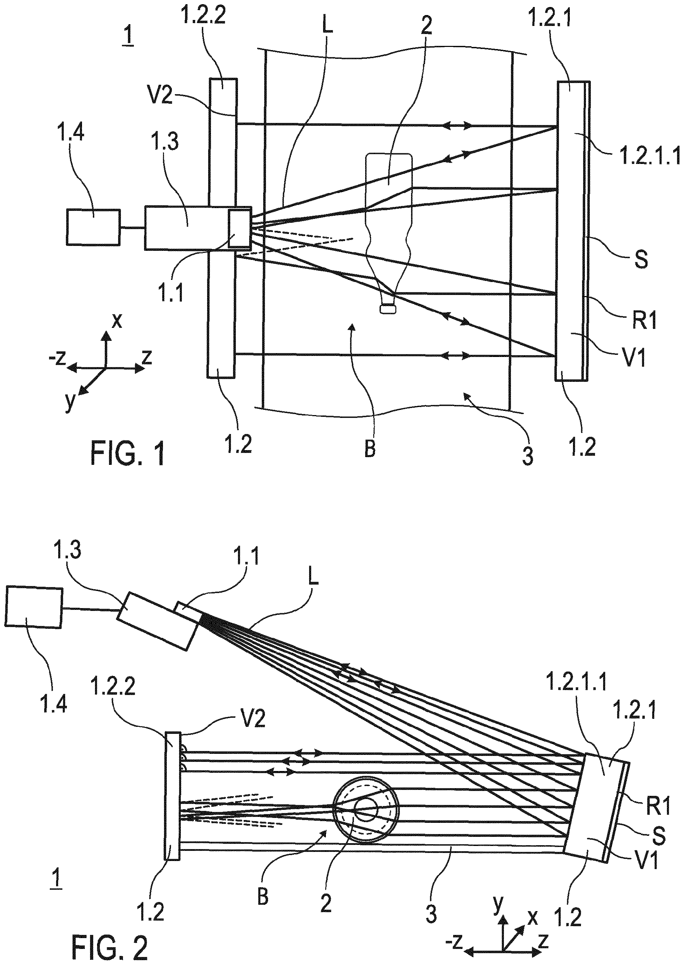

**Figur 1** zeigt eine Draufsicht einer erfindungsgemäßen Vorrichtung 1 zur Identifizierung von Leergut 2. **Figur 2** zeigt die in Figur 1 dargestellte erfindungsgemäße Vorrichtung 1 in einer Seitenansicht. Im Folgenden wird die erfindungsgemäße Vorrichtung 1 zur Identifizierung von Leergut 2 anhand beider Figuren beschrieben. Weiterhin wird in der folgenden Beschreibung ein Ausführungsbeispiel eines erfindungsgemäßen Verfahrens anhand beider Figuren näher erläutert.

Die erfindungsgemäße Vorrichtung 1 ist insbesondere in einem nicht näher dargestellten automatisierten Rücknahmesystem, beispielsweise in einem Leergutrücknahmeautomat, zur Identifizierung von Leergut 2 angeordnet. Bei dem Leergut handelt es sich beispielsweise um pfandpflichtige Getränkeverpackungen, wie z. B. Getränkeflaschen, Getränkedosen oder Getränkekästen. Unter Identifizierung des Leergutes 2 wird insbesondere eine eindeutige Erkennung des Leergutes 2 im Hinblick auf eine Art und/oder eine Form verstanden.

Die Vorrichtung 1 umfasst dabei eine Lichtquelle 1.1 zur Aussendung von Licht L, eine optische Einheit 1.2 zur Ablenkung und Reflexion des Lichtes L, eine Kamera 1.3 zur Aufnahme des reflektierten Lichtes L und eine Verarbeitungseinheit 1.4 zur Verarbeitung von Bildinformationen. Die optische Einheit 1.2 ist aus einem ersten Reflektor 1.2.1 und einem diesem gegenüberliegenden zweiten Reflektor 1.2.2 gebildet.

Die Lichtquelle 1.1 ist als Punktlichtquelle, beispielsweise als Leuchtdiode, ausgebildet und zeichnet sich daher durch eine besonders kleine Bauform bei gleichzeitig hoher Lichtausbeute, d. h. hoher Lichtleistung, aus.

Die Kamera 1.3 ist vorzugsweise als CCD-Kamera ausgebildet und zeichnet sich somit ebenfalls durch eine geringe Baugröße aus. Gleichzeitig ist eine zuverlässige Erfassung des Lichtes L möglich.

Bei einer Rücknahme von Leergut 2 ist dieses über eine Transporteinrichtung 3 transportierbar. Im dargestellten Ausführungsbeispiel ist die Transporteinrichtung 3 ein Transportband. Zu einer Identifizierung des Leergutes 2 positioniert die Transporteinrichtung 3 das Leergut 2 in einer vorgebbaren Lage in einen Bereich B zwischen dem ersten Reflektor 1.2.1 und dem zweiten Reflektor 1.2.2. Bei dem Leergut 2 handelt es sich beispielsweise um Getränkeflaschen und/oder Getränkedosen, deren Materialien eine unterschiedliche Transparenz aufweisen können.

Mittels der insbesondere als Punktlichtquelle ausgebildeten Lichtquelle 1.1 wird das Licht L zu dem ersten Reflektor 1.2.1 gesendet. An diesem wird es derart abgelenkt und reflektiert, dass es bezüglich einer horizontalen Richtung X und einer vertikalen Richtung Y parallelisiert in Richtung -Z des zweiten Reflektors 1.2.2 geleitet wird und den Bereich B durchquert.

Zu dieser Parallelisierung umfasst der erste Reflektor 1.2.1 eine Fresnel-Linse 1.2.1.1, welche im dargestellten Ausführungsbeispiel eine dem zweiten Reflektor 1.2.2 zugewandte und das Licht L durchlässige Vorderseite V des ersten Reflektors 1.2.1 bildet. Eine Rückseite R1 des ersten Reflektors 1.2.1, welche somit gleichzeitig die Rückseite R1 der Fresnel-Linse 1.2.1.1 bildet, ist mit einer das Licht L reflektierenden Schicht S versehen. Die Fresnel-Linse 1.2.1.1 ist aus einem Licht L durchlässigen Material gebildet, wobei das Material Glas oder Kunststoff ist. Daraus folgend ist der erste Reflektor 1.2.1 als Spiegel ausgebildet.

Die Fresnel-Linse 1.2.1.1 ist dabei derart ausgebildet, dass das von der Lichtquelle 1.1 ausgesendete und gestreute Licht L sowohl in horizontaler Richtung X als auch in vertikaler Richtung Y parallelisiert wird und aufgrund der Schicht S in parallelisierter Form zum zweiten Reflektor 1.2.2 gesendet wird. Die Fresnel-Linse 1.2.1.1 ist dabei an eine Ausbildung, Anordnung, Position und Ausrichtung der Lichtquelle 1.1 angepasst. Insbesondere erfolgt die Anpassung auch an eine Abstrahlcharakteristik, welche eine Streubreite sowie eine Abstrahlfläche und eine Auftrefffläche des Lichtes L auf die Fresnel-Linse 1.2.1.1 umfasst.

Alternativ ist die Fresnel-Linse 1.2.1.1 in nicht dargestellter Weise in die dem zweiten Reflektor 1.2.2 zugewandte und das Licht L durchlässige Vorderseite V1 des ersten Reflektors 1.2.1.1 eingebracht, wobei die Rückseite R1 des ersten Reflektors 1.2.1 mit der das Licht L reflektierenden Schicht S versehen ist.

Weiterhin ist der erste Reflektor 1.2.1 gekippt zum zweiten Reflektor 1.2.2 angeordnet, wobei ein Kippwinkel in Abhängigkeit der Ausbildung, Anordnung, Position und Ausrichtung der Lichtquelle 1.1 ausgebildet ist.

Dabei ist die Fresnel-Linse 1.2.1.1 insbesondere flach ausgebildet, d. h. sie weist keine gewölbte Grundform auf. Die reflektierende Schicht S auf der Rückseite R1 ist beispielsweise durch Verdampfen auf diese aufgebracht.

Bei der Durchquerung des Bereichs B wird das parallelisierte Licht L derart von dem Leergut 2 abgelenkt, dass nur das Licht L, welches ungehindert an dem Leergut L vorbeigeführt wird, im rechten Winkel auf den zweiten Reflektor 1.2.2 trifft und von diesem auf dem gleichen Weg aber in entgegengesetzter Richtung Z zurück zum ersten Reflektor 1.2.1 reflektiert wird.

Der zweite Reflektor 1.2.2 ist eine ebene Platte mit einer dem ersten Reflektor 1.2.1 zugewandten und das Licht L reflektierenden Vorderseite V2. Der zweite Reflektor 1.2.2 ist vorzugsweise aus einer Metallplatte gebildet, wobei die Metallplatte in Abhängigkeit vom verwendeten Metall und dessen Oberflächeneigenschaften sowie daraus resultierenden Reflexionseigenschaften lackiert oder unlackiert ist. In einem Ausführungsbeispiel ist eine Vorderseite V2 des zweiten Reflektors 1.2.2 matt, d. h. nicht glänzend ausgebildet.

Das vom ersten Reflektor 1.2.1 reflektierte und parallelisierte sowie ungehindert durch den Bereich B geführte Licht L trifft am zweiten Reflektor 1.2.2 im rechten Winkel zu dessen eine Reflexionsfläche bildende Vorderseite V2 auf. Aufgrund der planen Ausbildung des zweiten Reflektors 1.2.2 wird somit das Licht L derart reflektiert, dass es auf dem gleichen Weg, aber in entgegengesetzter Richtung Z erneut durch den Bereich B geleitet wird, um an dem ersten Reflektor 1.2.1 zurück in Richtung der Lichtquelle 1.1 reflektiert zu werden.

Da im dargestellten Ausführungsbeispiel der Vorrichtung 1 die Lichtquelle 1.1 und die Kamera 1.3 unmittelbar benachbart, d. h. unmittelbar nebeneinander oder übereinander, angeordnet sind, wird das Licht L gleichzeitig zu der Kamera 1.3 reflektiert. Die mittels der Kamera 1.3 erfassten Bildinformationen werden der Verarbeitungseinheit 1.4 zugeführt.

Mittels der Verarbeitungseinheit 1.4 wird insbesondere anhand einer Außenkontur, d. h. anhand einer Form, aber auch anhand einer Helligkeit des abgebildeten Leergutes 2, welche aus dem Material und der damit verbundenen Transparenz des Leergutes 2 resultiert, eine Identifizierung des Leergutes 2 durchgeführt. Da das Licht L zumindest zwei Mal auf dem gleichen Weg in entgegengesetzten Richtungen Z und -Z durch den Bereich B geleitet wird und zum größten Teil nur das Licht L, welches nicht vom Leergut 2 abgelenkt oder gebrochen wird, zum ersten Reflektor 1.2.1 und somit zur Kamera 1.3 zurückgesendet wird, wird ein hoher Kontrast für eine Erkennung der Form erreicht, was zu einer zuverlässigen Identifizierung des Leergutes 2 führt. Anhand dieser Identifizierung ist es möglich, das Leergut 2 einem speziell zugeordneten nicht näher dargestellten Sammelbehälter zuzuführen und einen korrekten Pfandbetrag zu ermitteln.

Aufgrund der Parallelisierung des Lichtes L mittels des ersten Reflektors 1.2.1, d. h. der Fresnel-Linse 1.2.1.1 ist insbesondere in Verbindung mit der kleinbauenden Ausbildung der Lichtquelle 1.1 und der Kamera 1.3 eine besonders kleinbauende Ausführung der Vorrichtung 1 möglich.

### BEZUGSZEICHENLISTE

- 1: Vorrichtung
- 1.1: Lichtquelle
- 1.2: Optische Einheit
- 1.2.1: Erster Reflektor
- 1.2.1.1: Fresnel-Linse
- 1.2.2: Zweiter Reflektor
- 1.3: Kamera
- 1.4: Verarbeitungseinheit
- 2: Leergut
- 3: Transporteinrichtung

- B: Bereich
- L: Licht
- R1: Rückseite
- S: Schicht
- V1: Vorderseite
- V2: Vorderseite
- X: Richtung
- Y: Richtung
- Z: Richtung
- -Z: Richtung

## Patentansprüche

1. Vorrichtung (1) zur Identifizierung von Leergut (2) mit einer Lichtquelle (1.1) zur Aussendung von Licht (L), einer optischen Einheit (1.2) zur Ablenkung und Reflexion des Lichtes (L), einer Kamera (1.3) zur Aufnahme des reflektierten Lichtes (L) und einer Verarbeitungseinheit (1.4) zur Verarbeitung von Bildinformationen, **dadurch gekennzeichnet,**
**dass** die optische Einheit (1.2) aus einem ersten Reflektor (1.2.1) und einem diesem gegenüberliegenden zweiten Reflektor (1.2.2) gebildet ist, wobei der erste Reflektor eine Fresnel-Linse (1.2.1.1) umfasst, mittels welcher das von der Lichtquelle (1.1) ausgesendete Licht (L) in horizontaler Richtung (X) und vertikaler Richtung (Y) parallelisierbar ist, wobei das Leergut (2) in einer vorgebbaren Lage in einem Bereich (B) zwischen dem ersten Reflektor (1.2.1) und dem zweiten Reflektor (1.2.2) positionierbar ist und die optische Einheit (1.2) derart angeordnet ist, dass der Bereich (B) zumindest zweimal auf dem gleichen Weg und/oder in entgegengesetzten Richtungen (Z, -Z) mit dem parallelisierten Licht (L) der Lichtquelle (1.1) durchflutbar ist.

2. Vorrichtung (1) nach Anspruch 1,
**dadurch gekennzeichnet, dass**
die Fresnel-Linse (1.2.1.1) in eine dem zweiten Reflektor (1.2.2) zugewandte und Licht (L) durchlässige Vorderseite (V1) des ersten Reflektors (1.2.1) eingebracht ist, wobei eine Rückseite (R1) des ersten Reflektors (1.2.1) mit einer Licht (L) reflektierenden Schicht (S) versehen ist.

3. Vorrichtung (1) nach Anspruch 1,
**dadurch gekennzeichnet, dass**
die Fresnel-Linse (1.2.1.1) eine dem zweiten Reflektor (1.2.2) zugewandte und Licht (L) durchlässige Vorderseite (V1) des ersten Reflektors (1.2.1) bildet, wobei eine Rückseite (R1) der Fresnel-Linse (1.2.1.1) mit einer Licht (L) reflektierenden Schicht (S) versehen ist.

4. Vorrichtung (1) nach einem der vorhergehenden Ansprüche,
**dadurch gekennzeichnet, dass**
der zweite Reflektor (1.2.2) eine plane und Licht (L) reflektierende dem ersten Reflektor (1.2.1) zugewandte Vorderseite (V2) aufweist.

5. Vorrichtung (1) nach einem der vorhergehenden Ansprüche,
**dadurch gekennzeichnet, dass**
der zweite Reflektor (1.2.2) aus einer lackierten Metallplatte gebildet ist.

6. Vorrichtung (1) nach einem der vorhergehenden Ansprüche,
**dadurch gekennzeichnet, dass**
die Lichtquelle (1.1) und die Kamera (1.3) unmittelbar benachbart angeordnet sind.

7. Vorrichtung (1) nach einem der vorhergehenden Ansprüche,
**dadurch gekennzeichnet, dass**
die Lichtquelle (1.2) eine Punktlichtquelle ist.

8. Vorrichtung (1) nach einem der vorhergehenden Ansprüche,
**dadurch gekennzeichnet, dass**
eine Transporteinrichtung (3) zur Beförderung des Leerguts (2) und zur Positionierung des Leerguts (2) in der vorgebbaren Lage zwischen dem ersten Reflektor (1.2.1) und dem zweiten Reflektor (1.2.2) vorgesehen ist.

9. Verfahren zur Identifizierung von Leergut (2),
**dadurch gekennzeichnet,**
**dass** Licht (L) zu einer einen ersten Reflektor (1.2.1) und einen zweiten Reflektor (1.2.2) umfassenden optischen Einheit (1.2) gesendet wird, wobei das auf den ersten Reflektor (1.2.1) treffende Licht (L) mittels einer Fresnel-Linse (1.2.1.1) derart abgelenkt, in horizontaler Richtung (X) und vertikaler Richtung (Y) parallelisiert und durch einen Bereich (B), welcher zur Anordnung des Leergutes (2) vorgesehen ist, geleitet wird, dass das parallelisierte Licht (L) mittels des zweiten Reflektors (1.2.2) reflektiert und parallelisiert in entgegengesetzter Richtung (Z) durch den Bereich (B) zurück auf den ersten Reflektor (1.2.1) geleitet und mittels diesem einer Kamera (1.3) zugeführt wird, so dass Bildinformationen in einer Verarbeitungseinheit (1.4) verarbeitet werden.
